# FASCICULE DE BREVET EUROPEEN

(11) **EP 1 413 018 B1**
(45) Date de publication et mention de la délivrance du brevet: **02.01.2008**
(21) Numéro de dépôt: 02772460.8
(22) Date de dépôt: 26.07.2002
(51) Int. Cl.: H01S 3/101, H01S 3/108

(54) **SOURCE LASER À BALAYAGE ANGULAIRE DU FAISCEAU ET CONVERSION DE FREQUENCE INTRA-CAVITE**
LASERQUELLE MIT RESONATORINTERNER LASERSTRAHLABLENKUNG UND FREQUENZUMWANDLUNG
LASER SOURCE WITH INTRA-CAVITY BEAM STEERING AND FREQUENCY CONVERSION

(30) Priorité: 31.07.2001 FR 0110258
(43) Date de publication de la demande: 28.04.2004
(73) Titulaire: Thales, 75008 Paris (FR)
(72) Inventeur: BRIGNON, Arnaud, Thales Intellectual Prop., F-94117 Arcueil Cedex (FR); HUIGNARD, Jean-Pierre, Thales Intellectual Prop., F-94117 Arcueil Cedex (FR)
(74) Mandataire: Chaverneff, Vladimir
(86) Numéro de dépôt international: PCT/FR2002/002689
(87) Numéro de publication internationale: WO 2003/012940

(56) Documents cités:
- FR-A- 2 790 336
- GB-A- 1 211 119
- US-A- 3 516 013
- US-A- 3 533 015
- US-A- 4 520 484
- BOURDERIONNET I ET AL: "Compact diode-pumped Nd:YVO4 MOPA laser with intracavity beam steering" CONFERENCE DIGEST. 2000 CONFERENCE ON LASERS AND ELECTRO-OPTICS EUROPE (CAT. NO.00TH8505) IEEE PISCATAWAY, 2000, page 1, NJ, USA ISBN: 0-7803-6319-1

## Description

La présente invention se rapporte à une source laser avec un dispositif de déflexion de faisceau laser et conversion de fréquence intra-cavité.

La déflexion des faisceaux laser et le contrôle de leur pointage sont des fonctions importantes qui ont des applications tant industrielles (marquage d'objets, ...) que militaires (identification, détection de câbles, guidage, télémétrie, ...). Les méthodes classiques de déflexion de faisceaux font appel à des miroirs galvanométriques qui présentent certaines limitations (encombrement, inertie et temps de réponse, fragilité, ...). Pour remplacer de tels miroirs, il existe des techniques de déflexion optique sans déplacement mécanique, et en particulier :
◆ Architecture combinant une source laser à oscillateur et amplificateur avec un miroir de conjugaison de phase et un déflecteur à cellule acousto-optique.
◆ Déflexion à l'intérieur de la cavité de la source laser au moyen d'un modulateur spatial à cristaux liquides.
◆ Déflexion haute efficacité à l'intérieur d'une cavité laser en anneau.

Pour l'ensemble de ces techniques, la déflexion du faisceau est réalisée à la longueur d'onde du milieu laser utilisé, par exemple à 1,06 µm pour un laser Nd :YAG. Cependant, aucune technique n'a été proposée pour convertir la longueur d'onde d'un faisceau laser ainsi défléchi. On connaît, par exemple, d'après les documents FR-A-2 790 336 et US-A-3 533 015, des dispositifs de déflexion pour sources laser, ne prévoyant aucun dispositif de conversion de longueur d'onde. Or, certaines applications citées ci-dessus nécessitent des faisceaux dont la longueur d'onde est située dans la région spectrale de sécurité oculaire, par exemple à 1,5 µm (pour la détection de câbles, l'identification, pour un télémètre autopointé, ...), ou bien dans la bande 3-5 µm (pour des contre-mesures), ou encore dans l'ultraviolet (pour le marquage ...). Ces longueurs d'ondes sont généralement obtenues par conversion de la longueur d'onde initiale (1.06 µm en général) dans des cristaux non-linéaires qui ne peuvent fonctionner qu'à des niveaux de puissance élevés, c'est-à-dire dans des conditions qui les rendent, de prime abord, inutilisables avec un faisceau à agilité angulaire.

La présente invention est définie par la revendication independante 1 et permette d'obtenir les mêmes amplitudes de déflexion qu'avec les dispositifs de déflexion sans conversion de longueur d'onde, qui n'ait pas la lenteur et la fragilité des dispositifs mécaniques, ce cristal fonctionnant dans des conditions optimales.

Le dispositif conforme à l'invention est du type comportant, dans un première cavité optique, un dispositif de déflexion, et dans une deuxième cavité, un cristal de conversion de fréquence disposé sur le point de passage de tous les faisceaux intra-cavité à agilité angulaire. De préférence, le cristal de conversion de fréquence est un cristal à effet Raman, dont le mécanisme de conversion de fréquence ne dépend pas de l'angle d'incidence du faisceau sur le cristal.

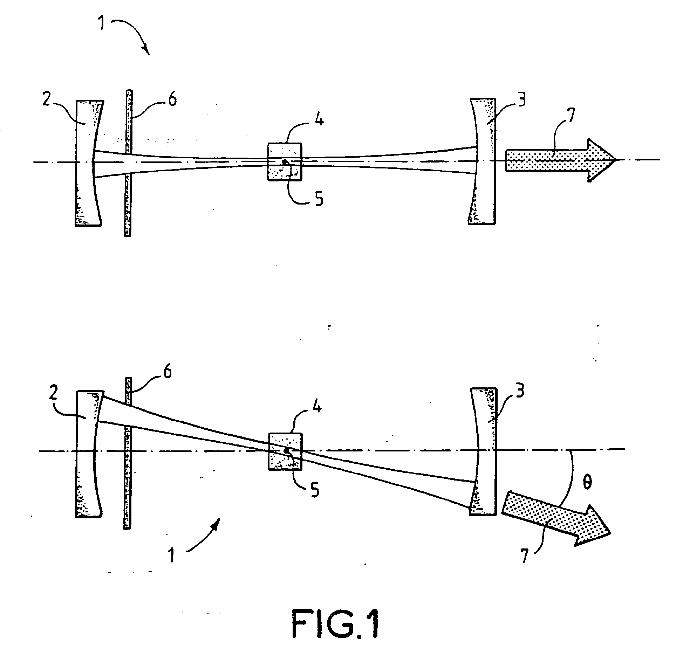

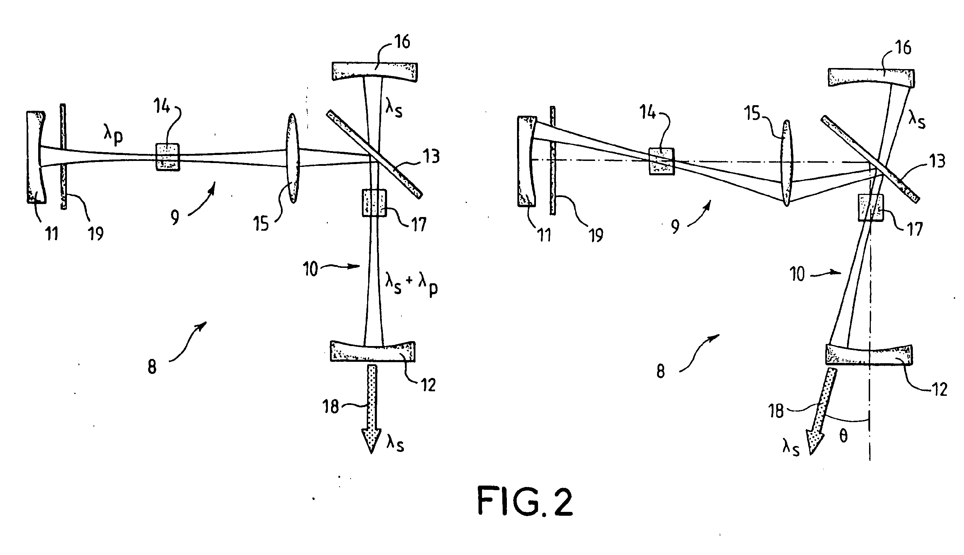

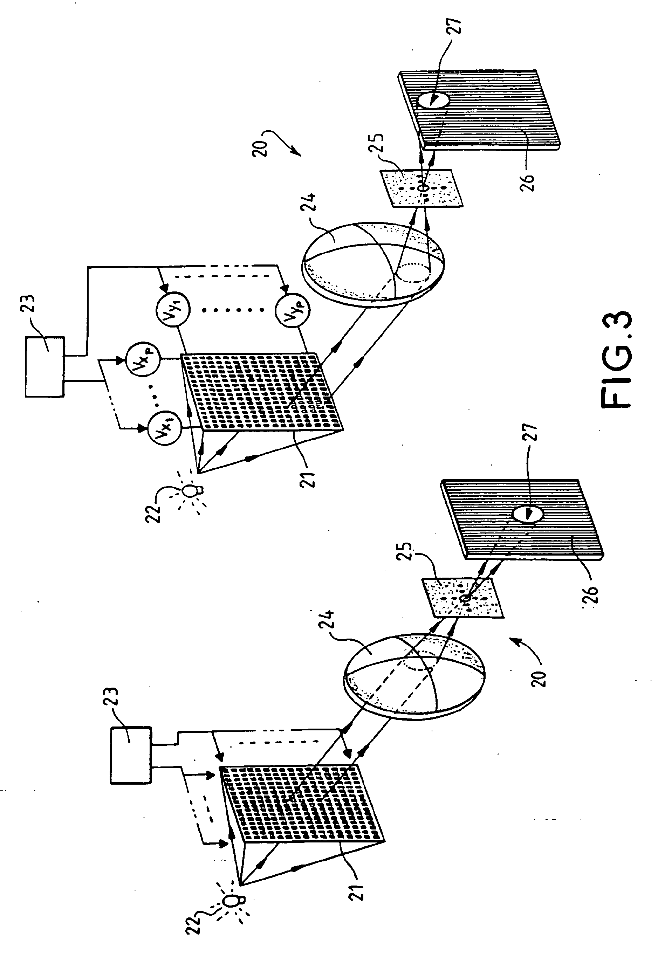

La présente invention sera mieux comprise à la lecture de la description détaillée des plusieurs modes de réalisation, pris à titre d'exemples non limitatifs et illustrés par le dessin annexé, sur lequel:
● la figure 1 est un schéma de principe d'un exemple utile à la comprehension de l'invention sans conversion de fréquence, avec une cavité laser à miroirs sphériques et à déflexion intra-cavité, montrant ce dispositif à l'état de repos et à l'état de déflexion ;
● la figure 2 est un schéma de principe d'un mode de réalisation du dispositif de l'invention avec conversion de fréquence, à cavités dites "concentriques," et
● la figure 3 est un schéma de principe d'un mode de réalisation d'un obturateur à position programmable comportant une valve à cristaux liquides adressée optiquement par un modulateur spatial de lumière, montrant ce dispositif à l'état de repos et à l'état de déflexion.

Dans une cavité optique, telle que mentionnée en préambule, le modulateur spatial jouant le rôle d'obturateur à ouverture à position programmable est disposé à un endroit où le faisceau laser est focalisé, ce qui peut risquer de l'endommager si le laser en question est un laser de puissance. Pour résoudre ce problème, on peut réaliser la déflexion de faisceau de la façon représentée en figure 1.

Le dispositif 1, exemple utile à la comprehension de l'invention, représenté sur la figure 1, est représenté à l'état non dévié du faisceau laser en haut et à l'état dévié du faisceau en bas de la figure. Ce dispositif 1 comporte deux miroirs sphériques concaves 2, 3 formant la cavité laser. Le miroir 2 est à haute réflectivité à la longueur d'onde laser, tandis que le miroir 3 est partiellement réfléchissant. Leur distance mutuelle est égale à la somme de leurs rayons de courbure R1, R2 respectivement. Le cristal de milieu laser 4 est disposé en un endroit 5 de la cavité par lequel passent tous les faisceaux intra-cavité, à savoir sur l'axe optique joignant les centres des miroirs 2, 3, à la distance R1 du miroir 2 (c'est-à-dire la distance R2 du miroir 3). Un modulateur spatial 6 est placé près de l'un des miroirs, dans le cas présent près du miroir 2. Du fait de la géométrie de la cavité à miroirs sphériques, le diamètre des faisceaux qui y sont engendrés est le plus grand près de ces miroirs . Il en résulte que la densité d'énergie des faisceaux près des miroirs est la plus faible (alors qu'elle est la plus élevée au point 5), et que le modulateur 6 peut supporter un laser de plus forte puissance que dans le cas des modes de réalisation précédents.

La déflexion du faisceau laser à l'intérieur de la cavité est commandée par déplacement de la zone passante du modulateur spatial 6. Le contrôle de la dimension de cette zone passante permet de contrôler la divergence du faisceau laser de sortie 7. Il est à noter que la cavité, formée entre les miroirs 2, 3 fonctionne en limite de stabilité. Son fonctionnement correct est assuré par le modulateur spatial 6 qui joue le rôle de filtre spatial.

On a représenté en figure 2 un mode de réalisation préféré du dispositif de l'invention pour la conversion en fréquence d'un faisceau laser et la déflexion de ce faisceau, dispositif qui est référencé 8, et qui met en oeuvre l'effet Raman stimulé. Sur cette figure 2, on a représenté sur la partie gauche le dispositif à l'état de « repos » (sans déflexion) et sur la partie droite ce même dispositif à l'état de déflexion.

Le dispositif 8 comporte deux cavités optiques résonantes 9, 10 imbriquées dites « concentriques ». La cavité 9 est formée par deux miroirs sphériques 11, 12 dont les axes optiques sont orthogonaux entre eux dans le présent exemple, mais cette orthogonalité n'est pas une condition nécessaire pour le bon fonctionnement du dispositif. Une lame dichroïque 13, disposée à 45° par rapport à ces axes, à leur intersection, assure la continuité optique de la cavité 9. Cette cavité 9 comporte un milieu laser 14 disposé sur l'axe optique du miroir 11, à la distance R1 de ce miroir (R1 étant le rayon de courbure du miroir 11). On dispose une lentille convergente 15 entre le milieu laser 14 et la lame dichroïque 13.

La cavité 10 est formée entre ledit miroir 12 et un autre miroir sphérique 16 dont l'axe optique est confondu avec celui du miroir 12. Un milieu 17 à effet Raman est disposé sur l'axe optique commun des miroirs 12, 16, au foyer image de la lentille 15 (qui image le milieu laser 14 sur le milieu Raman 17). La distance entre le miroir 12 et le milieu 17 est égale au rayon de courbure R2 du miroir 12, tandis que la distance entre le milieu 17 et le miroir 16 est égale au rayon de courbure R3 du miroir 16. La longueur d'onde laser (de pompage) dans la cavité 9 (due au milieu 14) est référencée λₚ, et celle propre à la cavité 10 est référencée λₛ. Du fait de l'imbrication des cavités 9 et 10, les deux longueurs d'ondes λₚ et λₛ sont présentes entre la lame 13 et le miroir 12.

Les caractéristiques des traitements optiques des miroirs 11, 12 et 16 et de la lame 13 sont les suivantes :
- lame 13: hautement réfléchissante à λₚ et hautement transmissive à λₛ ;
- miroir 11 : hautement réfléchissant à la longueur d'onde λₚ ;
- miroir 12 : hautement réfléchissant à la longueur d'onde λₚ et partiellement réfléchissant à la longueur d'onde λₛ ;
- miroir 16 : hautement réfléchissant à la longueur d'onde λₛ.

Il en résulte qu'il sort du miroir 12 un faisceau laser 18 à la longueur d'onde λₛ.

Un obturateur 19 à zone passante à position programmable est disposé dans la cavité 9, près du miroir 11. Cet obturateur peut être de préférence, celui de la figure 3 décrit ci-dessous. En déplaçant la position de cette zone passante, on fait varier l'orientation des faisceaux intra-cavité dans les cavités 9 et 10, et donc l'orientation du faisceau de sortie 18, comme indiqué sur les deux parties de la figure 2. Grâce aux miroirs sphériques respectifs des cavités 9 et 10 et à la lentille 15, les faisceaux dans ces deux cavités passent toujours par les centres des milieux 14 et 17, respectivement.

Il est à remarquer que l'effet Raman n'est pas sensible à l'angle d'incidence du faisceau à partir duquel il est provoqué, mais que cet effet nécessite un faisceau incident de très forte densité. Pour cette raison, le milieu Raman 17 est disposé à l'intérieur de la cavité 10. Il est également à remarquer qu'une dégradation spatiale du faisceau λₚ, due à des effets thermiques affectant les divers composants des cavités, est corrigée au cours du processus de conversion Raman. Le faisceau converti en fréquence est limité par diffraction, comme précisé, par exemple, dans les deux articles suivants :
[1] Murray, Powell, Peyghambarian, Smith, Austin, Stolzenberger, « Generation of 1.5 µm radiation through intracavity solid-state Raman shifting in Ba(NO3)2 nonlinear crystals », Optics Letters, vol. 20, 1995, pp ;1017-1019.
[2] Murray, Austin, Powell, « Intracavity Raman conversion and Raman beam cleanup », Optical Materials, vol. 11, 1999, pp ;353-371.

Le modulateur spatial 6 ou 19 pourrait être un modulateur à matrice de cristaux liquides, à adressage électronique, mais une telle solution présenterait les inconvénients suivants :
- Si les pixels de la matrice sont trop petits, il faut « ouvrir » plusieurs pixels adjacents pour obtenir une zone passante suffisamment grande. Les zones « mortes » (dites « black matrix », c'est-à-dire opaques) introduisent des pertes lumineuses gênantes pour le fonctionnement du laser ;
- Si les pixels ont la bonne dimension et sont suffisamment grands, l'espacement entre deux pixels adjacents est tel qu'il empêche le balayage continu du faisceau.

Pour éliminer ces inconvénients, liés à la structure pixélisée d'un modulateur spatial à adressage électrique d'une matrice de cristaux liquides, l'invention prévoit, comme représenté en figure 3, l'utilisation d'une valve à cristaux liquides à adressage optique.

On a représenté en figure 3 un dispositif 20 d'obturation à position programmable de la zone « passante ». Sur cette figure, le schéma de gauche correspond à l'état de « repos » de la zone passante (zone centrée), tandis que celui de droite correspond à l'état dévié du faisceau traversant l'obturateur.

Le dispositif 20 comporte un modulateur spatial de lumière 21, du type classique à matrice de cristaux liquides, qui est éclairé par une source de lumière 22 non nécessairement cohérente. Le modulateur 21 est adressé électriquement par un dispositif de commande classique 23, et il est suivi d'une lentille d'imagerie 24 au foyer image de laquelle est disposé un dispositif de filtrage 25, par exemple un trou de filtrage pratiqué dans un matériau opaque. La lentille 24 forme l'image de la zone passante du modulateur 21 sur une valve à cristaux liquides 26 munie d'un polariseur.

Le modulateur 21 est « pixelisé » comme expliqué ci-dessus, c'est-à-dire que sa résolution est relativement grossière. Malgré cet inconvénient, l'image 27 sur la valve 26 d'une zone passante du modulateur (zone éclairée par la source 22) est une zone circulaire à bords nets, grâce au filtre 25, et on peut le remplacer par une légère défocalisation de l'image, ce qui permet également de supprimer la structure « pixelisée » du modulateur spatial 21.

La valve 26 comporte des électrodes uniformes transparentes sur toute sa surface utile, et n'introduit donc pas de pertes dans la cavité laser dans laquelle elle est insérée (elle peut remplacer l'obturateur 6 de la figure 1, le miroir 2 se trouvant alors entre la lentille 24 et la valve 26, et ce miroir est traité pour réfléchir la longueur d'onde qui oscille dans la cavité et pour transmettre la lumière issue de la source 22 et qui adresse la valve 26).

Ainsi, dans le dispositif 20 de la figure 3, la valve 26 est adressée optiquement par un modulateur spatial conventionnel 21, c'est-à-dire « pixelisé » et adressé électriquement. Malgré ce défaut qu'est la pixelisation, on produit une « zone passante » uniforme 27 de la dimension voulue sur la valve. Cette zone passante de la valve détermine la direction du faisceau dans la cavité dans laquelle est insérée la valve, de la même façon qu'avec un obturateur classique. Pour obtenir cette zone passante, il suffit d' « ouvrir » plusieurs pixels correspondants du modulateur 21. La défocalisation de l'image de la zone passante du modulateur sur la valve ou l'utilisation du filtre 25 permet d'obtenir ladite zone passante uniforme sur la valve 26.

Dans un exemple de réalisation du dispositif de la figure 2, avec l'obturateur de la figure 3, pour une émission laser à une longueur d'onde située dans la zone de sécurité oculaire, les différents paramètres avaient les valeurs suivantes :
■ Milieu laser : Nd : YAG pompé par des diodes laser.
■ Longueur d'onde du faisceau pompe (issu du milieu laser) λₚ = 1,3 µm.
■ Milieu Raman : cristal de Ba(NO₃)₂.
■ Longueur d'onde du faisceau converti en fréquence : λₛ = 1,5 µm (zone de sécurité oculaire).
■ Miroir 11 : haute réflectivité à 1,3 µm ; Lame dichroïque 13: haute réflectivité à 1,3 µm et haute transmittivité à 1,5 µm ; Miroir 12 : haute réflectivité à 1,3 µm et 50 % de réflexion à 1,5 µm ; Miroir 16 : haute réflectivité à 1,5 µm.
■ Obturateur 19 : valve adressée optiquement : en BSO-cristal liquide (excellente transmission à la longueur d'onde pompe).
■ La cavité pompe est déclenchée pour obtenir des impulsions de quelques nanosecondes.

Avec une telle source, on peut obtenir des impulsions à 1,5 µm de plusieurs centaines de mJ avec un balayage angulaire du faisceau de sortie 71 d'une amplitude 2θ (θ étant l'angle maximal de déflexion par rapport à l'axe optique des miroirs 12 et 16 ), qui est, par exemple, d'environ 6° pour une longueur de cavité 10 de 50 cm et des miroirs 12, 16 de diamètre 2,54 cm (1 pouce).

## Revendications

1. Source laser à balayage angulaire du faisceau de sortie et conversion de fréquence intra-cavité, **caractérisée en ce qu'**elle comprend deux cavités (9, 10) imbriquées délimitées chacune par deux miroirs sphériques (11-12, 12-16), l'un des miroirs (12) étant commun aux deux cavités, une lame dichroïque (13) étant disposée à l'intersection de ces axes, la première cavité (9) comportant un milieu laser (14) au centre de son premier miroir (11), ainsi qu'une lentille convergente (15) entre le milieu laser et la lame dichroïque, et la deuxième cavité (10) comportant un cristal de conversion de fréquence (17) disposé au foyer image de la lentille convergente qui image le milieu laser sur le milieu Raman, un dispositif faisant varier l'orientation des faisceaux intra-cavité (19) étant disposé dans la première cavité.

2. Source selon la revendication 1, **caractérisée en ce que** le dispositif faisant varier l'orientation des faisceaux intra-cavité comporte un obturateur (6, 19).

3. Source selon la revendication 2, **caractérisée en ce que** le dispositif obturateur comporte une valve optique (26) à adressage optique par un modulateur spatial de lumière (21).

4. Source selon la revendication 3, **caractérisée en ce qu'**elle comporte entre le modulateur spatial et la valve une lentille d'imagerie (24) au foyer image de laquelle est disposé un dispositif de filtrage (25).

5. Source selon la revendication 3, **caractérisée en ce qu'**elle comporte entre le modulateur et la valve une lentille d'imagerie (24) formant sur la valve une image légèrement défocalisée du modulateur.

## Claims

1. Laser source with intracavity frequency conversion and angular scanning of the output beam, **characterized in that** it comprises two interleaved cavities (9, 10) each bounded by two spherical mirrors (11-12, 12-16), one (12) of the mirrors being common to the two cavities, a dichroic plate (13) being placed at the intersection of these axes, the first cavity (9) comprising a lasing medium (14) at the centre of its first mirror and also a convergent lens (15) between the lasing medium and the dichroic plate, and the second cavity (10) comprising a frequency conversion crystal (17) placed at the image focus of the convergent lens, which images the lasing medium onto the Raman medium, a device varying the orientation of the intracavity beams (19) being placed in the first cavity.

2. Source according to Claim 1, **characterized in that** the device varying the orientation of the intracavity beams comprises a shutter (6, 19).

3. Source according to Claim 2, **characterized in that** the shutter device comprises an optical valve (26) with optical addressing by a spatial light modulator (21).

4. Source according to Claim 3, **characterized in that** it includes, between the spatial modulator and the valve, an imaging lens (24) at the image focus of which a filtering device (25) is placed.

5. Source according to Claim 3, **characterized in that** it includes, between the modulator and the valve, an imaging lens (24) forming a slightly defocused image of the modulator on the valve.

## Patentansprüche

1. Laserquelle mit Winkelabtastung des Ausgangsstrahls und resonatorinterner Frequenzkonvertierung, **dadurch gekennzeichnet, dass** sie zwei miteinander verschachtelte Resonatoren (9, 10) aufweist, die jeweils durch zwei sphärische Spiegel (11-12, 12-16) begrenzt sind, wobei einer der Spiegel (12) beiden Resonatoren gemeinsam ist, ein Strahlteiler (13) an der Schnittlinie dieser Achsen angeordnet ist, der erste Resonator (9) in der Mitte seines ersten Spiegels (11) ein Lasermedium (14) sowie eine konvergierende Linse (15) zwischen dem Lasermedium und dem Strahlteiler umfasst, und der zweite Resonator (10) ein Frequenzkonvertierungskristall (17) umfasst, das im Bildbrennpunkt der konvergierenden Linse angeordnet ist, die das Lasermedium auf das Raman-Medium abbildet, wobei eine die Ausrichtung der resonatorinternen Strahlen (19) verändernde Vorrichtung im ersten Resonator angeordnet ist.

2. Quelle gemäß Anspruch 1, **dadurch gekennzeichnet, dass** die die Ausrichtung der resonatorinternen Strahlen verändernde Vorrichtung einen Verschluss (6, 19) umfasst.

3. Quelle gemäß Anspruch 2, **dadurch gekennzeichnet, dass** die Verschlussvorrichtung ein durch einen räumlichen Lichtmodulator (21) optisch angesteuertes optisches Ventil (26) umfasst.

4. Quelle gemäß Anspruch 3, **dadurch gekennzeichnet, dass** sie zwischen dem räumlichen Modulator und dem Ventil eine Abbildungslinse (24) umfasst, in deren Bildbrennpunkt eine Filtervorrichtung (25) angeordnet ist.

5. Quelle gemäß Anspruch 3, **dadurch gekennzeichnet, dass** sie zwischen dem Modulator und dem Ventil eine Abbildungslinse (24) umfasst, die auf dem Ventil ein leicht defokussiertes Modulatorbild bildet.
